Europäisches Patentamt

European Patent Office

Office européen des brevets

(11) Veröffentlichungsnummer: **0 508 304 A1**

## EUROPÄISCHE PATENTANMELDUNG

(21) Anmeldenummer: **92105659.4**

(22) Anmeldetag: **02.04.92**

(51) Int. Cl.5: **B65G 47/71**, B65G 47/68, B65G 47/64, B65G 15/10

(30) Priorität: **11.04.91 DE 4111837**

(43) Veröffentlichungstag der Anmeldung:
**14.10.92 Patentblatt 92/42**

(84) Benannte Vertragsstaaten:
**CH DE DK FR GB IT LI SE**

(71) Anmelder: **Dixie-Union Verpackungen GmbH**
**Römerstrasse 12**
**W-8960 Kempten(DE)**

(72) Erfinder: **Spittler-Herrmann, Helmut**
**Illerstrasse 26**
**W-8961 Wiggensbach(DE)**

(74) Vertreter: **Pfister, Helmut, Dipl.-Ing.**
**Buxacher Strasse 9**
**W-8940 Memmingen/Bayern(DE)**

(54) **Vorrichtung zum Transport eines aus einer oder wenigen Reihen ankommenden Gutes in eine andere, insbesondere grössere, Zahl von Transportreihen.**

(57) Bei einer Transportvorrichtung bestehend aus Umlenkrollen (1,5) und Förderriemen (2) ist eine Umlenkrolle (1) seitlich verschiebbar, um das empfindliche Fördergut seitlich zu versetzen. Die Riemen (2) sind vorzugsweise Keilriemen (12). Es werden eine Mehrzahl von so gestalteten Förderbahnabschnitten aneinander gesetzt, um eine schonende, jedoch exakte seitliche Versetzung der Fördergutstapel zu erreichen. Hierdurch können eine Mehrzahl gleichförmiger Transportgutreihen gebildet werden.

Rank Xerox (UK) Business Services

EP 0 508 304 A1

Die Erfindung betrifft eine Vorrichtung zum Transport von empfindlichem Gut, das auf einer Vielzahl von parallel nebeneinander geführten schmalen Förderriemen aufliegt, mit gerillten Umlenkrollen für die Förderriemen, wobei mindestens eine der Umlenkrollen in Richtung der Rollenachse verschiebbar ist.

Eine Vorrichtung der vorstehend angegebenen Gattung ist beispielsweise bekannt geworden durch die EP 0 274 229 - B1. Diese bekannte Vorrichtung besitzt unter anderem ein Umlenkrollenpaar mit einer Mehrzahl nebeneinander angeordneten Rillen, in denen Förderriemen geführt sind. Die Förderriemen bestehen aus Gummi oder einem gummiähnlichen Material und besitzen im wesentlichen einen kreisförmigen Querschnitt.

Es ist bekannt, die eingangs angegebene Gattung von Fördervorrichtungen zum Transport von empfindlichem Gut, beispielsweise von dünn aufgeschnittenen, aufeinander liegenden Lebensmittelscheiben zu benützen. Die Scheiben können dabei aufeinander gestapelt sein, sie können aber auch schindelartig aufeinander liegen. Derartige Stapel von dünnen Scheiben von Lebensmitteln werden beispielsweise durch Schneideinrichtungen erzeugt, bei denen ein Schneidmesser mit hoher Geschwindigkeit umläuft und in kurzer Folge einzelne Wurstscheiben abschneidet. Die Wurstscheiben fallen dabei auf ein Transportband, ein Fördermittel oder dergleichen, das sich so bewegt, daß entweder Stapel oder auch schindelartig aufeinander liegende Portionen entstehen. Zwischen den einzelnen Portionen ergibt sich dabei eine Distanz.

Da die Schneidvorrichtung eine hohe Arbeitsgeschwindigkeit aufweist, verlassen die Transportgutstapel die Schneidvorrichtung mit vergleichsweise hoher Geschwindigkeit. Diese Geschwindigkeit ist wesentlich größer als die Arbeitsgeschwindigkeit von Verpackungsmaschinen, in denen die Transportgutstapel verpackt werden. Bei der Verpackung werden die Transportgutstapel zum Beispiel in Mulden einer Folie eingelegt. Anschließend wird diese Folie durch eine Oberfolie abgedeckt, und nach einem Evakuierungsvorgang werden die einzelnen Verpackungen verschweißt bzw. versiegelt.

Da die Arbeitsgeschwindigkeit der Verpackungsmaschine wesentlich geringer ist als die Arbeitsgeschwindigkeit der Schneidvorrichtung, ergibt sich die Notwendigkeit, aus der ankommenden Reihe von Transportgutstapeln eine andere Zahl von Reihen, insbesondere eine größere Zahl von Reihen derartiger Transportgutstapel zu schaffen, um auf diese Weise eine mehrreihig arbeitende Verpackungsmaschine zu beschicken.

Wenn nun durch eine Vorrichtung der eingangs angegebenen Gattung die einzelnen Transportgutstapel seitlich versetzt werden, ergibt sich, daß die Abgabestelle der Transportgutstapel nicht immer genau vorherbestimmbar ist. Auch bei exakter seitlicher Verschiebung der abgebenden Umlenkrolle verändern sich die Abgabestellen. Diese Ungenauigkeit der seitlichen Versetzung hat zur Folge, daß die Mulden in der Verpackungsmaschine, die zu beschicken sind, nicht hinreichend genau getroffen werden. Eine ungenaue Ablage der Transportgutstapel führt dazu, daß die Mulden größer dimensioniert werden müssen als den Abmessungen der Stapel entspricht, wenn vermieden werden soll, daß die Transportgutstapel teilweise auf dem Rand der Mulden zu liegen kommen und den Verschlußvorgang stören. Größere Verpackungen stellen einen zusätzlichen Aufwand dar, und die Verpackung ist auch unansehnlich, weil der Eindruck entsteht, sie wären nur teilweise gefüllt. Beim Evakuierungsvorgang ergeben sich außerdem unerwünschte Deformationen der nur teilweise gefüllten Mulden.

Die ungenaue Ablage der bekannten Fördervorrichtung ist offenbar eine Folge der benützten Fördermittel. Bei der seitlichen Verschiebung einer der Umlenkrollen laufen die Förderschnüre an den Flanken der Rillen auf und die Schnüre verdrehen sich. Dadurch ergibt sich eine unkontrollierte seitliche Verschiebung der Fördergutstapel.

Der Erfindung liegt die Aufgabe zugrunde, eine Anordnung zu treffen, die es erlaubt, die Fördergutstapel exakt zu transportieren und an genau vorbestimmten Stellen abzusetzen. Zur Lösung dieser Aufgabe geht die Erfindung aus von einer Vorrichtung der eingangs angegebenen Gattung. Erfindungsgemäß wird vorgeschlagen, daß die Förderriemen einen mehrkantigen Querschnitt aufweisen.

Überraschenderweise hat sich ergeben, daß bei einem mehrkantigen Querschnitt der Schnüre, wobei die Rillen in den Umlenkrollen dieser Mehrkantform angepaßt sind, eine seitliche Verschiebung einer der Umlenkrollen in ausreichendem Maße möglich ist, ohne daß die Förderriemen in den Rillen aufsteigen. Der mehrkantige Förderriemen verdreht sich jedoch nicht in sich, so daß ein einwandfreier Transport des empfindlichen Fördergutes möglich ist. Es ist auch die Gefahr beseitigt, daß die Scheiben wegen ungleichmäßiger Verdrehung der einzelnen Förderschnüre zusammengeschoben werden, so daß sie nicht mehr eben liegen. Dieses unkontrollierbare Zusammenschieben ist ebenfalls eine Ursache der ungenauen Ablage der einzelnen Fördergutstapel.

Es ist gefunden worden, daß für die erfindungsgemäßen Zwecke verschiedene Formen von mehrkantigen Förderschnüren brauchbar sind. Insbesondere eignen sich solche Förderriemen für die erfindungsgemäßen Zwecke, die an der Auflagefläche für das Gut im wesentlichen eben sind. Es wurde gefunden, daß vor allem Keilriemen gut geeignet sind.

Wie schon ausgeführt, wird das Band mit den Fördergutstapeln vergleichsweise rasch bewegt, um die von der Schneidmaschine gefertigten Stapel so zu transportieren, daß zwischen den Stapeln eine ausreichende Distanz entsteht. Der Arbeitsgeschwindigkeit der zugehörigen Fördereinrichtungen müssen naturgemäß auch die Arbeitsgeschwindigkeit derjenigen Vorrichtung angepaßt sein, die die einzelnen Fördergutstapel seitlich versetzt. Bei der seitlichen Versetzung ergibt sich nun das Problem, daß rasch aufeinander folgende Fördergutstapel unterschiedlichen Reihen zugeordnet werden sollen. Um dies zu erreichen, sind sehr rasche seitliche Bewegungen der axial verschiebbaren Umlenkrolle notwendig. Die erforderlichen seitlichen Beschleunigungen bringen die Gefahr mit sich, daß das Transportgut bei diesen seitlichen Bewegungen nicht mitgenommen wird. Diese Erscheinung wird unterstützt durch den Umstand, daß die Förderriemen vom Transportgut angefeuchtet bzw. eingefettet werden, so daß die Haftkräfte reduziert werden.

Die Schwierigkeit, daß bei den seitlichen Bewegungen das Transportgut nicht mitgenommen wird, ergibt sich insbesondere bei runden Förderriemen, da hierbei das Transportgut nur auf sehr schmalen Flächen aufliegt. Aber auch bei der Verwendung von mehrkantigen Förderriemen gemäß der Erfindung können Schwierigkeiten im Zusammenhang mit den notwendigen seitlichen Beschleunigungskräften auftreten.

Zur Lösung dieses Teilproblems schlägt die Erfindung nun vor, daß mindestens je zwei Umlenkrollen, von denen mindestens eine Umlenkrolle in Achsrichtung verschiebbar ist, mit den von den Umlenkrollen geführten Förderriemen einen Förderbahnabschnitt bilden, wobei mehrere derartige Förderbahnabschnitte hintereinander gesetzt sind, um aus einer oder wenigen ankommenden Reihe oder Reihen des Transportgutes eine andere, insbesondere größere Zahl von Transportgutreihen zu bilden.

Wenn mehrere Förderbahnabschnitte im Sinn der Erfindung angewandt werden, ist es möglich, mit geringeren seitlichen Bewegungen auszukommen und dennoch läßt sich erreichen, daß sich eine hinreichende Zahl von Transportgutreihen ergibt. Insbesondere wird es möglich, die einzelnen Transportgutstapel genau zu positionieren.

Bei der Erfindung ergibt sich gegebenenfalls eine längere Förderstrecke, auf der die seitliche Versetzung der Transportgutstapel erfolgt. Dies ist aber ohne Nachteil, da die einzelnen Abschnitte vergleichsweise kurz bleiben und die Unterstützung und Führung der Förderriemen durch die Umlenkrollen im einzelnen Abschnitt immer ausreicht.

Nach einem weiteren Merkmal der Erfindung ist vorgesehen, daß mehrere Förderbahnabschnitte einen gemeinsamen Antrieb aufweisen. Dies vereinfacht die Bauweise und erreicht eine gleichmäßige Fördergeschwindigkeit auf allen Abschnitten. Während der Antrieb in Förderrichtung für mehrere Abschnitte gemeinsam ist, ist der Verschiebungsantrieb der axial verschiebbaren Umlenkrollen jeweils einzeln ausgebildet, um die Bewegungsbahnen der einzelnen Fördergutstapel beeinflussen zu können.

Insbesondere schlägt hierbei die Erfindung vor, daß die Verschiebungsantriebe an ein gemeinsames Steuergerät angeschlossen sind, das Zahl und Anordnung der zu bildenden Transportgutreihen bestimmt. Hierdurch wird es möglich, nach einem bestimmten Programm die einzelnen Abschnitte zu steuern, mit dem Ziel der gleichmäßigen Beschikkung der Transportgutreihen und mit dem weiteren Ziel einer möglichst schonenden Behandlung des empfindlichen Gutes, insbesondere im Hinblick auf die seitlichen Beschleunigungskräfte.

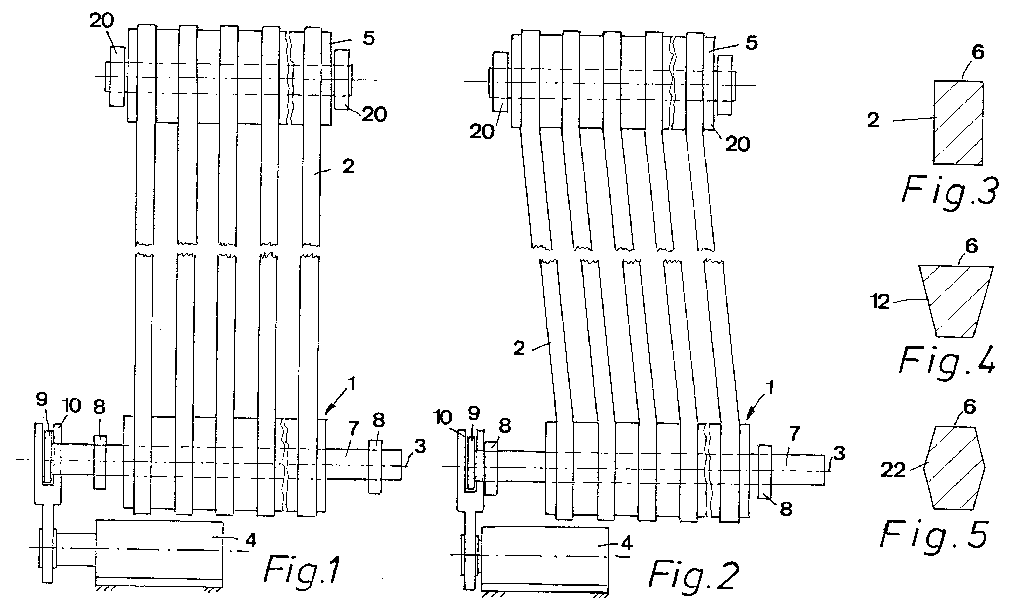

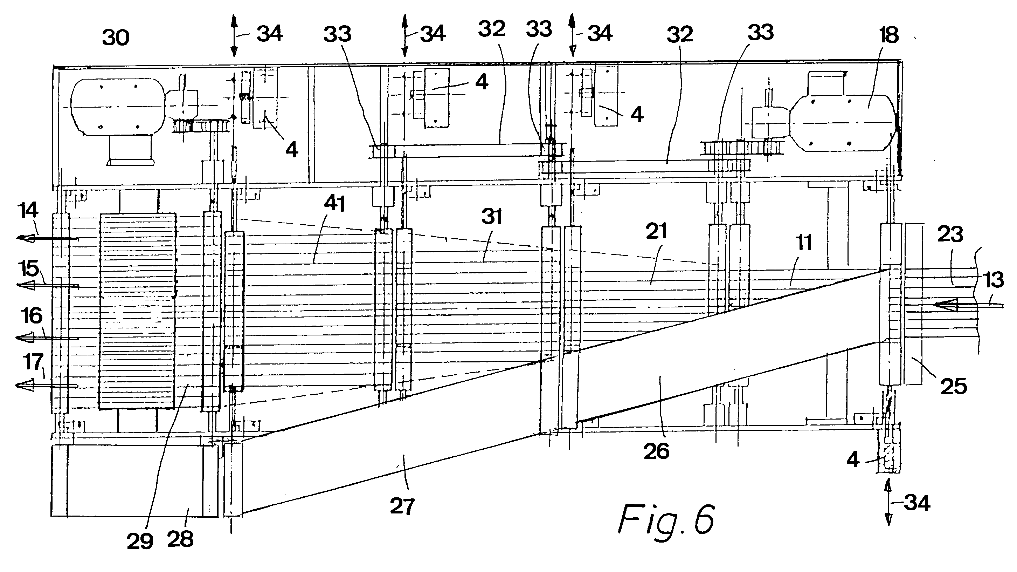

In der Zeichnung ist ein Ausführungsbeispiel der Erfindung schematisch dargestellt. Es zeigen:
Fig. 1
eine Draufsicht auf eine erfindungsgemäße Vorrichtung,
Fig. 2
eine Draufsicht auf die Vorrichtung nach der Fig. 1 in einer anderen Betriebsstellung,
Fig. 3, Fig. 4 und Fig. 5
Querschnitte durch Förderriemen der erfindungsgemäßen Vorrichtung,
Fig. 6
eine Draufsicht auf eine andere Ausführungsform der erfindungsgemäßen Vorrichtung und
Fig. 7
eine Seitenansicht zur Darstellung der Fig. 6.

Beim Ausführungsbeispiel, das in den Fig. 1 und 2 gezeigt ist, sind zwei Umlenkrollen 1 und 5 vorgesehen, wobei jede Umlenkrolle walzenförmig gestaltet ist und am Umfang Rillen für die Förderriemen 2 besitzt. Die Höhe der Förderriemen 2 ist etwas größer gehalten als die Tiefe der Rillen, so daß ein Kontakt des Fördergutes mit den Umlenkrollen 1 und 5 verhindert wird. Bei der Verwendung von Keilriemen ist ein entsprechend geringer Flankenabstand der Rillen vorzusehen.

Die Umlenkrolle 5 ist in seitlichen Lagern 20 gehalten und besitzt beispielsweise eine in den Fig. 1 und 2 nicht näher dargestellten Antrieb. Die Umlenkrolle 1 ist dagegen mit ihren Achszapfen 7 verschiebbar in einem Lagergestell 8 gelagert. An einem Ende der Zapfen 7 ist eine Scheibe 9 befestigt, in der ein gabelartiges Verstellelement 10 angreift. Dieses Verstellelement steht unter der Wirkung des mechanischen Antriebes 4.

Zur Verstellung des Verstellelementes 10 (vgl. Fig. 2) kann die ganze Umlenkrolle 1 in Richtung der Achse 3 verschoben werden, so daß sich je nachdem eine seitliche Ablenkung der Förderrichtung nach der einen oder anderen Seite ergibt, wie dies aus der Fig. 2 hervorgeht. Die Förderrichtung kann dabei von der Umlenkrolle 5 zur Umlenkrolle 1 sein oder auch umgekehrt. In der Regel ist jedoch zu bevorzugen, daß die nicht seitlich verschiebbare Umlenkrolle diejenige am aufnehmenden Ende der Fördereinrichtung ist, während die seitlich verschiebbare Umlenkrolle 1 am Abgabeende angeordnet ist. Dies erlaubt die Ausnutzung der Zeitspanne des Verbleibens der Fördergutstapel auf dem Förderriemen 2 während des Verstellvorganges, so daß mit geringeren seitlichen Beschleunigungskräften ausgekommen werden kann.

Die Fig. 3 zeigt den Querschnitt durch einen Förderriemen 2, der einen rechteckigen Querschnitt besitzt. Insbesondere ist hierbei auch die Auflagefläche 6 eben, auf der der Fördergutstapel aufliegt.

Eine zu bevorzugende Form ist in der Fig. 4 gezeigt. Der Förderriemen 12 besitzt eine Keilform.

Der Förderriemenquerschnitt des Riemens 22 gemäß Fig. 5 ist sechseckig. Bei dieser Bauform ist die Aufsteigneigung der Förderriemen in den zugeordneten Rillen der Umlenkrollen 1 bzw. 5 bei seitlicher Verschiebung einer der Umlenkrollen vergleichsweise gering.

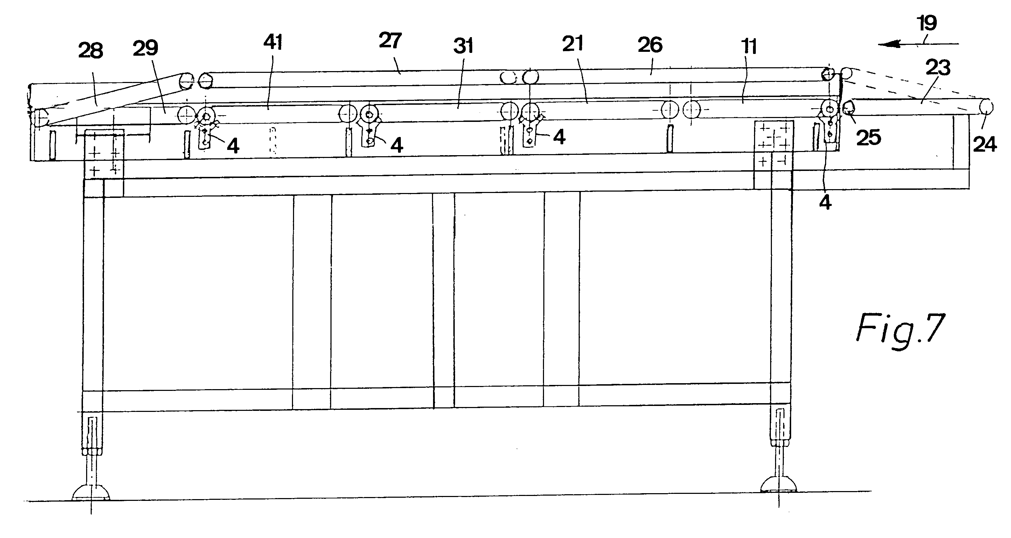

In den Darstellungen der Fig. 6 und 7 sind eine Mehrzahl von Förderbahnabschnitten 11 bis 41 hintereinander gesetzt. Das Fördergut wird durch eine nicht näher dargestellte Fördereinrichtung in Richtung des Pfeiles 19 (Fig. 7) herangefördert und gelangt zuerst auf den Förderbahnabschnitt 23. Dieser Förderbahnabschnitt besitzt eine an sich bekannte Ausbildung mit Umlenkrollen 24 und Förderriemen 25. Wie aus der Fig. 7 deutlich wird, kann die Neigung dieses Förderbahnabschnittes 23 verstellt werden, so daß bestimmte Transportgutstapel aus der hauptsächlichen Transportrichtung nach oben ausgelenkt werden und auf die Förderbahnabschnitte 26, 27 und 28 gelangen. Auf diese Weise können Transportgutstapel, die beispielsweise ein Unter- oder Übergewicht besitzen, aussortiert werden, um diese durch Nachwiegung verpackungsfähig zu machen.

Ist der Förderbahnabschnitt 23 nicht angehoben, gelangt das Transportgut auf den Förderbahnabschnitt 11 und anschließend auf die Förderbahnabschnitte 21, 31 und 41. Diese Förderbahnabschnitte besitzen jeweils ein Umlenkrollenpaar, bestehend aus den Umlenkrollen 1 und 5, wobei die Umlenkrolle 1 in Achsrichtung verschiebbar ist, während die Umlenkrolle 5 mit einem Antrieb versehen ist. Die angetriebenen Umlenkrollen sind durch Ketten 32 und Kettenräder 33 oder ähnliche Mittel mit dem gemeinsamen Antrieb 18 verbunden, während für die Umlenkrollen 1 jeweils einzelne Verschiebungsantriebe 4 vorgesehen sind. Beim Passieren der vier Förderbahnabschnitte 11, 21, 31 und 41 kann dem Fördergut eine genau vorbestimmte seitliche Versetzung vermittelt werden, so daß im Bereich des Förderbahnabschnittes 29, der sich an den Förderbahnabschnitt 41 anschließt, eine größere Zahl von Transportgutreihen gebildet wird. Diese Transportgutreihen sind durch die Pfeile 14 bis 17 angedeutet. Die vom Förderbahnabschnitt 23 angeförderte Transportgutreihe ist durch den Pfeil 13 angedeutet.

Die einzelnen Antriebe 4 sind an ein gemeinsames, nicht näher dargestelltes Steuergerät angeschlossen, so daß durch sinngemäße Verschiebungsbewegung der Umlenkrollen 1, die durch die Pfeile 34 angedeutet und in beiden Richtungen möglich sind und die auch Teilbewegungen sein können, die einzelnen Transportgutstapel jeweils den Reihen 14 bis 17 zugeleitet werden. Im Bereich des Förderbahnabschnittes 29, der vom Motor 30 angetrieben ist und ebenfalls aus einem Umlenkrollenpaar und Förderriemen besteht, können besondere Einrichtungen angeordnet sein, die die angeförderten Transportgutstapel jeweils so beeinflussen, daß gleichförmige Reihen erhalten werden, die dann nachfolgend beispielsweise in Mulden eines Folienbandes eingelegt werden.

## Patentansprüche

1. Vorrichtung zum Transport von empfindlichem Gut, das auf einer Vielzahl von parallel nebeneinander geführten schmalen Förderriemen aufliegt, mit gerillten Umlenkrollen für die Förderriemen, wobei mindestens eine der Umlenkrollen in Richtung der Rollenachse verschiebbar ist, dadurch gekennzeichnet, daß die Förderriemen (2,12,22) einen mehrkantigen Querschnitt aufweisen.

2. Vorrichtung nach Anspruch 1, dadurch gekennzeichnet, daß die Förderriemen (2,12,22) an der Auflagefläche (6) für das Gut im wesentlichen eben sind.

3. Vorrichtung nach einem oder beiden der vorhergehenden Ansprüche, dadurch gekennzeichnet, daß die Förderriemen (12) Keilriemen sind.

4. Vorrichtung insbesondere nach einem oder mehreren der vorhergehenden Ansprüche, dadurch gekennzeichnet, daß mindestens je zwei Umlenkrollen (1,5), von denen mindestens eine Umlenkrolle (1) in Achsrichtung verschiebbar ist, mit den von den Umlenkrollen (1,5) geführten Förderriemen (2,12,22) einen Förderbahnabschnitt (11,21,31) bilden, wobei mehrere derartige Förderbahnabschnitte hintereinander gesetzt sind, um aus einer oder wenigen ankommenden Reihe oder Reihen (13) des Transportgutes eine andere, insbesondere größere Zahl von Transportgutreihen (14-17) zu bilden.

5. Vorrichtung nach Anspruch 4, dadurch gekennzeichnet, daß mehrere Förderbahnabschnitte (11,21,31) einen gemeinsamen Antrieb (18) aufweisen.

6. Vorrichtung nach einem oder mehreren der vorhergehenden Ansprüche, dadurch gekennzeichnet, daß die axial verschiebbaren Umlenkrollen (1) einzelne Verschiebungsantriebe (4) aufweisen.

7. Vorrichtung nach einem oder mehreren der vorhergehenden Ansprüche, dadurch gekennzeichnet, daß die Verschiebungsantriebe (4) an ein gemeinsames Steuergerät angeschlossen sind, das Zahl und Anordnung der zu bildenden Transportgutreihen (14-17) bestimmt.

Fig.1

Fig.2

Fig.3

Fig.4

Fig.5

EP 0 508 304 A1

Fig.6

EP 0 508 304 A1

Fig.7

Europäisches Patentamt

# EUROPÄISCHER RECHERCHENBERICHT

Nummer der Anmeldung

EP 92 10 5659

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 274 229 (THURNE ENGINEERING)<br>* Spalte 5, Zeile 55 - Spalte 6, Zeile 29; Abbildungen 6,7 *<br>--- | 1-6 | B65G47/71<br>B65G47/68<br>B65G47/64<br>B65G15/10 |
| Y | US-A-4 011 935 (MASSEY)<br>* Spalte 2, Zeile 18 - Zeile 52; Abbildungen 1-3 *<br>--- | 1-6 | |
| Y | FR-A-2 459 195 (GALLET SA)<br>* Seite 2, Zeile 5 - Zeile 10; Abbildung *<br>--- | 1-3 | |
| A | WO-A-8 910 318 (THURNE ENGINEERING)<br>* Seite 18, Zeile 15 - Seite 19, Zeile 3; Abbildung 9 *<br>* Seite 12, Zeile 4 - Zeile 7 *<br><br>----- | 1-3,6,7 | |

**RECHERCHIERTE SACHGEBIETE (Int. Cl.5)**

B65G

Der vorliegende Recherchenbericht wurde für alle Patentansprüche erstellt

| Recherchenort | Abschlußdatum der Recherche | Prüfer |
|---|---|---|
| DEN HAAG | 10 JULI 1992 | NEVILLE O.J. |

EPO FORM 1503 03.82 (P0403)